# EUROPEAN PATENT APPLICATION

(11) **EP 1 703 349 A2**
(43) Date of publication of application: **20.09.2006**
(21) Application number: 06005176.0
(22) Date of filing: 14.03.2006
(51) Int. Cl.: G05B 19/42, B25J 9/16

(54) **Off-line teaching device**

(30) Priority: 17.03.2005 JP 2005077847
(71) Applicant: FANUC LTD, Minamitsuru-gun, Yamanashi 401-0597 (JP)
(72) Inventor: Ban, Kazunori, Minamitsuru-gun Yamanashi 401-0304 (JP); Arimatsu, Taro, Minamitsuru-gun Yamanashi 401-0310 (JP); Jumonji, Takashi, Fujiyoshida-shi Yamanashi 403-0005 (JP)
(74) Representative: Thum, Bernhard

(57) **Abstract**

An off-line teaching device, for adjusting a vision sensor and carrying out set-up work off-line, which used to be done in the field, so as to reduce the operation time in the field. The off-line teaching device has a storing device for storing data including the shapes and the dimensions of a workpiece, a robot and a vision sensor, and a display for indicating images of the workpiece, the robot and the vision sensor. The teaching device also has a simulation program for generating the images of the workpiece, the robot and the vision sensor on the display and for calculating measurement data of the vision sensor based on the arrangement of the images on the display, and a sensor program for carrying out measurement on the display by the vision sensor based on the measurement data.

## Description

### BACKGROUND OF THE INVENTION

### 1. Field of the Invention

The present invention relates to an off-line teaching device used in a measuring operation using a vision sensor.

### 2. Description of the Related Art

In the prior art, a measuring operation is carried out by actually providing an object to be measured, a vision sensor and a camera. For example, Japanese Unexamined Patent Publication No. 8-167800 discloses a mounting device in which a component may be identified by detecting reflected or transmitted light, of an irradiating light, on a mark of the component.

The measuring operation in the prior art takes much time because the measurement is carried out after an object and equipment such as a camera are actually prepared and arranged at predetermined positions. When the motion of a control unit of an industrial robot or the like is compensated by using a measuring result of a vision sensor, an actual control unit must be prepared for checking the measuring result by means of the actual motion of the robot. Further, adjusting work, in the field, is considerable in a system using a vision sensor. For example, it is necessary to adjust a parameter for detecting the object to be measured through a trial and error, in the field.

### SUMMARY OF THE INVENTION

Accordingly, it is an object of the present invention to adjust a vision sensor and carry out set-up work off-line, which used to be done in the field, so as to reduce the operation time in the field.

To this end, according to the present invention, there is provided an off-line teaching device to allow off-line arranging and adjusting of a vision sensor for measuring an object to be measured, the off-line teaching device comprising: a storing part for storing a measurement condition of the object; a displaying part for indicating an image of the vision sensor and an image of the object; a simulating part for generating the images of the vision sensor and the object on the displaying part and for calculating measurement data for measuring the object by means of the vision sensor and based on the measurement condition.

The off-line teaching device may further comprise a choice assisting part for assisting the choice of an optical condition of a camera of the vision sensor, based on data in relation to the shape and the dimensions of the object.

The off-line teaching device may further comprise a measurement executing part for carrying out measurement, by means of the vision sensor, on the displaying part based on the measurement data and a programming part for preparing a robot program defining the motion of a robot handling the object.

The vision sensor may be attached to a movable part of the robot, otherwise, the vision sensor may be arranged at a fixed place.

### BRIEF DESCRIPTION OF THE DRAWINGS

The above and other objects, features and advantages of the present invention will be made more apparent by the following description, of the preferred embodiments thereof, with reference to the accompanying drawings, wherein:
Fig. 1 is a schematic diagram of a basic constitution of an off-line teaching device according to the invention;
Fig. 2 is a flowchart showing a teaching method for a vision sensor using the off-line teaching device;
Fig. 3 is an exemplary view of a display of the off-line teaching device, on which images of a workpiece and a robot are displayed;
Fig. 4 is a view indicating the display of Fig. 3 further including an image of a camera; and
Fig. 5 is an exemplary view of a display on the off-line teaching device during a model teaching.

### DETAILED DESCRIPTIONS

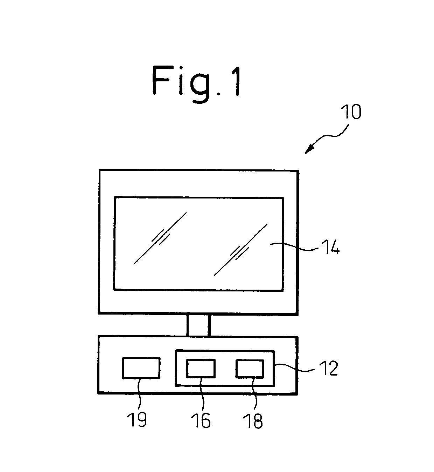

The present invention will be described below with reference to the drawings. Fig. 1 shows a typical constitution of an off-line teaching device 10 for a vision sensor according to the invention. The off-line teaching device 10 may be a processing device such as a personal computer. The teaching device includes a storing device 12, such as a ROM or hard disk, for storing data of the shapes and the dimensions of an object or a workpiece to be worked, a robot for carrying out various operations such as conveying, assembling, welding, deburring and sealing the workpiece, and a vision sensor for measuring the workpiece. The teaching device 10 also includes a display 14 for indicating images of the workpiece, the robot and the vision sensor. Further, the teaching device 10 includes a simulation program 16 for generating the images of the workpiece, the robot and the vision sensor on the display 14 and for calculating measurement data of the vision sensor based on the arrangement of the images on the display, and a sensor program 18 for carrying out measurement on the display by the vision sensor based on the measurement data. These programs may be stored in the storing device 12. The teaching device 10 further includes a processing device or a CPU 19 for executing each process assigned to the teaching device. The teaching device 10 may include a keyboard (not shown) for inputting data by an operator.

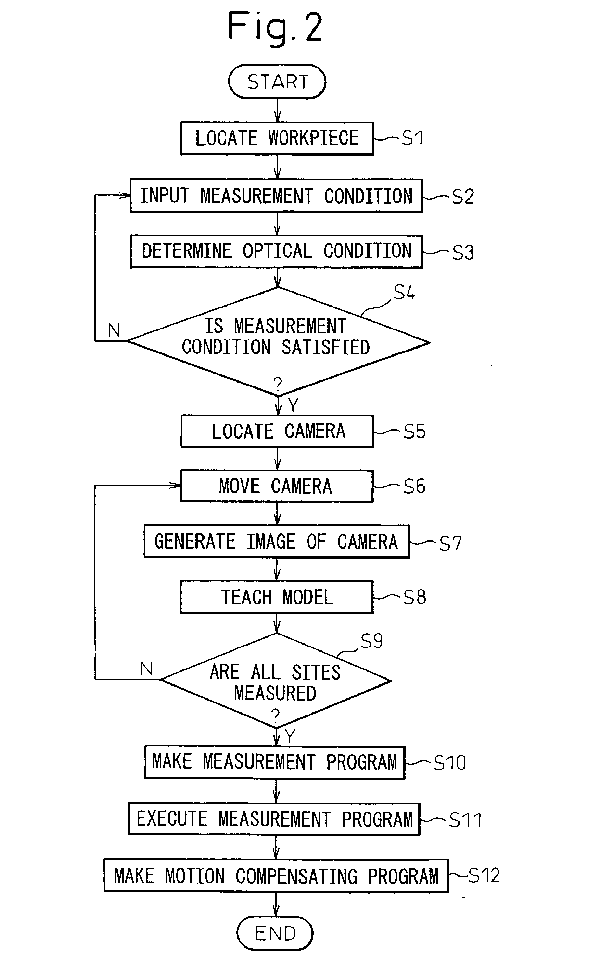

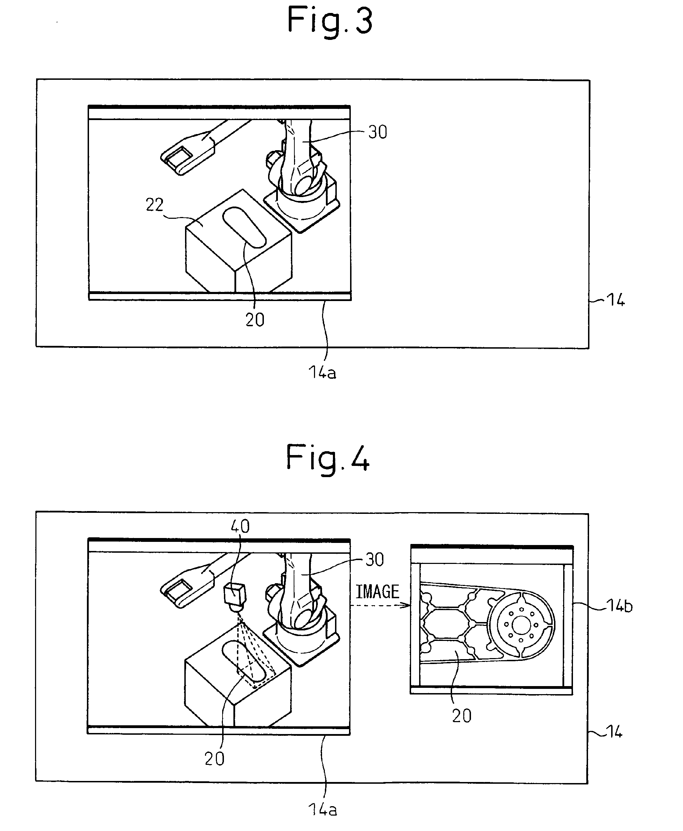

Next, a procedure for teaching the vision sensor using the off-line teaching device is described with reference to a flowchart of Fig. 2 and display examples as shown in Figs. 3 to 5.

First, images of a workpiece to be measured and a robot are located on the display 14 of the teaching device 10 (step S1). Fig. 3 shows a typical example of the display. A window 14a displayed on the display 14 may be generated by executing the above simulation program 16. As shown in Fig. 3, the window 14a includes the images of workpiece 20 positioned on a worktable 22 and the robot 30. These images may be indicated by using CAD data previously stored. The location of the images may be determined by the operator using the keyboard. Otherwise, the location may be previously set as a suitable initial location. The image data including the positions and the orientations of the workpiece 20 and the robot 30 may be fed to the sensor program 18.

Next, a measurement condition (for example, a site of the workpiece to be measured, the style of the measurement (two-dimension or three-dimension), and/or the measurement accuracy) is inputted (step S2). This step may be performed by the operator using the keyboard of the teaching device 10.

Based on the above measurement condition and previously stored CAD data including the shape and the dimension of the workpiece, optical conditions, such as the types of a camera and a lens thereof to be used as the vision sensor, a field of the camera, a standoff, etc., is determined (step S3). The optical condition may be inputted by the operator, alternatively, an assist program for selecting the camera, capable of indicating a window on the display, may be previously installed in the teaching device 10, by which the operator may interactively input or check the type of the camera and the measurement accuracy, etc. At this point, the camera may be arranged on a fixed place or, alternatively, attached to a movable part, such as an arm, of the robot 30, depending on the above measurement condition. In general, by measuring the position and the orientation of the workpiece using the vision sensor, it is possible to identify and inspect the workpiece and, further, to make a motion compensating program for the robot on a base coordinate system or a tool coordinate system of the robot.

After that, the measurement accuracy expected by using the selected camera is estimated and, then, the result is compared to a desired accuracy included in the measurement condition inputted in step S2 (step S4). When the estimated accuracy is higher than the desired accuracy, the procedure progresses to step S5, otherwise, returns to step S2 to reexamine the measurement condition.

Next, as shown in Fig. 4, an image of the selected camera denoted by a numeral 40 is located at a suitable position (e.g., where the camera may roughly image the workpiece 20) in the window 14a (step S5). At this point, by executing the sensor program 18, an image of the workpiece 20, which is expected to be actually obtained by the camera 40, may be indicated on a window 14b. Therefore, the operator may visually check whether the selected camera 40 is suitable for the measurement.

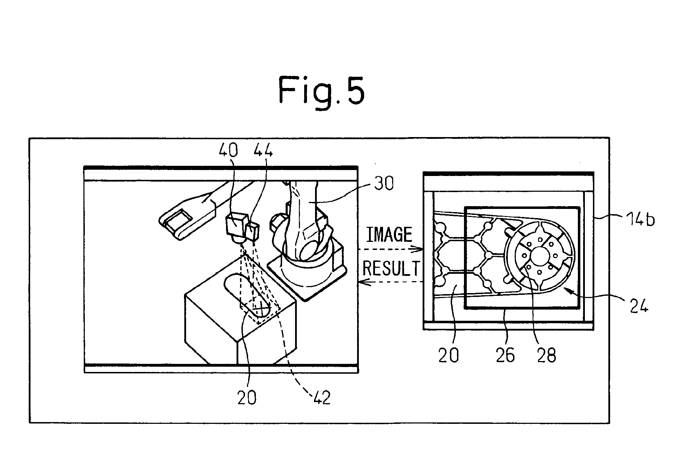

Teaching device 10 then carries out the model teaching of each site to be measured through steps S6 to S9. First, as shown in Fig. 5, in the window 14a, the camera 40 is moved and oriented so as to image a site or a model 24 to be measured in a field 42 of the camera 40 (step S6). In the window 14b, on the other hand, an image of the site imaged by the camera is generated (step S7). The site in the window 14b is indicated as a featured model defined by a closing line 26 or pointed by a cross-shape marker 28. A floodlight device 44 such as a laser floodlight may be arranged on or near the camera 40, whereby three-dimensional images of the workpiece 20 and the model 24 may be obtained. Further, shadow processing may be performed on the model 24, with reference to data including the location of a lighting apparatus (not shown). When the image thus generated on the window 14b is considered to be valid, the model teaching is carried out (step S8). When a plurality of sites are to be measured, a set of steps S6 to S8 is repeated a certain number of times, the certain number being equal to the number of the plurality of sites (step S9). Therefore, a taught model corresponding to all of the sites may be obtained and a measurement program for obtaining the taught model may be prepared (step S10).

Teaching device 10 executes the measurement program prepared in steps S6 to S10 (step S11) and prepares a robot motion program including a motion compensating program for simulating the compensational motion of the robot 30 (step S12). In other words, the position and the orientation of the robot 30, during handling the workpiece 20 using the robot, may be compensated by a measurement result of the vision sensor. Also, the teaching device 10 may purposely change the position and/or the orientation of the model 24 and/or the camera 40 on the display 14a and, then, execute the motion compensating program to check whether the motion of the robot is suitably compensated.

The measurement program and the motion compensating program thus prepared may be downloaded to the actual system as a program or data for an operation in the field. By using the program and data obtained by the off-line teaching device, the workload of trial and error regarding the vision sensor in the field may be reduced or eliminated, whereby the total time and workload in the field may be greatly reduced. Further, the compensating motion of the robot may be simulated or checked off-line, which also contributes to a reduction of the workload in the field.

In the above embodiment, the simulation program 16 and the sensor program 18 are executed in the same device and results thereof are indicated on the same display. However, the programs may be separately executed in different devices and the results may be indicated on different displays.

According to the off-line teaching device of the present invention, teaching and adjusting of the vision sensor may be executed off-line by locating images of the object to be measured and the vision sensor with a calculator, whereby the workload and time for a trial and error, such as a program coordination in the field, may be greatly reduced. Further, the compensating motion of the robot for handling the object may be checked off-line.

While the invention has been described with reference to specific embodiments chosen for the purpose of illustration, it should be apparent that numerous modifications could be made thereto, by one skilled in the art, without departing from the basic concept and scope of the invention.

## Claims

1. An off-line teaching device (10) to allow off-line arranging and adjusting of a vision sensor (40) for measuring an object (20) to be measured, **characterized in that** the off-line teaching device comprises:
a storing part (12) for storing a measurement condition of the object (20);
a displaying part (14) for indicating an image of the vision sensor (40) and an image of the object (20);
a simulating part (19) for generating the images of the vision sensor (40) and the object (20) on the displaying part (14) and for calculating measurement data for measuring the object (20) by means of the vision sensor (40) and based on the measurement condition.

2. The off-line teaching device as set forth in claim 1, further comprising a choice assisting part (19) for assisting the choice of an optical condition of a camera of the vision sensor (40), based on data in relation to the shape and the dimensions of the object (20) .

3. The off-line teaching device as set forth in claim 1, further comprising a measurement executing part (19), for carrying out measurement by means of the vision sensor (40), on the displaying part (14) based on the measurement data and a programming part (19) for preparing a robot program defining the motion of a robot (30) handling the object (20).

4. The off-line teaching device as set forth in claim 3, wherein the vision sensor (40) is attached to a movable part of the robot (30).

5. The off-line teaching device as set forth in any one of claims 1 to 3, wherein the vision sensor (40) is arranged at a fixed place.
